# FASCICULE DE BREVET EUROPEEN

(11) **EP 2 918 041 B1**
(45) Date de publication et mention de la délivrance du brevet: **02.01.2019**
(21) Numéro de dépôt: 13801653.0
(22) Date de dépôt: 12.11.2013
(51) Int. Cl.: H04L 9/32, H04L 29/06, G06F 21/44, G06K 7/10

(54) **PROCÉDÉ D'AUTHENTIFICATION MUTUELLE ENTRE UNE ÉTIQUETTE RADIO ET UN LECTEUR**
VERFAHREN ZUR BEIDSEITIGEN AUTHENTIFIKATION ZWISCHEN EINER FUNKETIKETTE UND EINEM FUNKLESEGERÄT
METHOD FOR MUTUAL AUTHENTICATION BETWEEN A RADIO-TAG AND A RADIO READER

(30) Priorité: 12.11.2012 FR 1260737
(43) Date de publication de la demande: 16.09.2015
(73) Titulaire: Orange, 75015 Paris (FR)
(72) Inventeur: ROBSHAW, Matthew, Seattle, WA 98199 (US); FERREIRA, Loïc, F-92130 Issy Les Moulineaux (FR)
(86) Numéro de dépôt international: PCT/FR2013/052715
(87) Numéro de publication internationale: WO 2014/072667

(56) Documents cités:
- FR-A1- 2 903 544
- US-A1- 2011 057 779
- US-A1- 2012 200 386
- MARC GIRAULT ET AL: "On the Fly Authentication and Signature Schemes Based on Groups of Unknown Order", JOURNAL OF CRYPTOLOGY, SPRINGER-VERLAG, NE, vol. 19, no. 4, 25 septembre 2006 (2006-09-25), pages 463-487, XP019440584, ISSN: 1432-1378, DOI: 10.1007/S00145-006-0224-0 cité dans la demande
- MCLOONE M ET AL: "New Architectures for Low-Cost Public Key Cryptography on RFID Tags", CIRCUITS AND SYSTEMS, 2007. ISCAS 2007. IEEE INTERNATIONAL SYMPOSIUM O N, IEEE, PI, 1 mai 2007 (2007-05-01), pages 1827-1830, XP031181642, DOI: 10.1109/ISCAS.2007.378269 ISBN: 978-1-4244-0920-4

## Description

L'invention concerne un procédé d'authentification mutuelle entre une étiquette radio et un lecteur radio. Plus précisément, l'invention concerne une authentification au cours de laquelle les messages échangés entre un lecteur radio et une étiquette radio empruntent des canaux de communication différents.

Il est connu que dans le domaine des communications sans contact, différentes fréquences peuvent être utilisées lors de communications entre un lecteur et une étiquette radio. Ainsi, par exemple, des étiquettes radio de type «RFID» (de l'anglais « Radio Frequency Identification ») peuvent communiquer avec un équipement de type lecteur radio selon différentes fréquences, par exemple une fréquence de type « HF » (pour « Haute Fréquence », ou « High Frequency » en anglais) de 13,56 MHz, ou une fréquence de type « UHF » (pour « Ultra Haute Fréquence », ou « Ultra High Frequency ») dans la gamme des 890 MHz. La fréquence HF est typiquement utilisée dans des applications « NFC » (de l'anglais « Near Field Communication ») et permet des échanges d'informations entre entités jusqu'à une distance d'une dizaine de centimètres. On trouve des étiquettes NFC dans des cartes sans contact, des passeports, etc. La fréquence UHF permet de lire une étiquette à plusieurs mètres de distance. Généralement, une étiquette et un lecteur fonctionnent et échangent des messages sur une fréquence donnée. Il existe également des étiquettes et lecteurs radios qui fonctionnent selon différentes fréquences. Ainsi, ils peuvent communiquer selon une première fréquence ou selon une seconde fréquence, suivant par exemple la distance qui les sépare.

Dans le cadre des authentifications à base de cryptographie asymétrique entre un lecteur et une étiquette radio passive qui reçoit son énergie du lecteur lorsque celui-ci se trouve à proximité, il est habituel de mettre en oeuvre une authentification de l'étiquette auprès du lecteur sur un premier canal de communication, par exemple un canal de type UHF. Cependant, une authentification du lecteur par l'étiquette peut ensuite s'avérer impossible, le canal de communication UHF pouvant ne pas être adapté pour une authentification du lecteur par l'étiquette. En effet, l'authentification du lecteur par l'étiquette peut nécessiter que celle-ci procède à des calculs cryptographiques coûteux en termes d'énergie. Or l'alimentation électrique fournie par le lecteur à l'étiquette passive via le canal UHF peut s'avérer insuffisante lorsque l'étiquette a besoin d'effectuer certains calculs pour authentifier le lecteur. Ainsi, il est habituel de mettre en oeuvre l'authentification du lecteur par l'étiquette sur un deuxième canal de communication, par exemple le canal HF. La communication sur le canal HF est établie lorsque le lecteur et l'étiquette sont à une dizaine de centimètres l'un de l'autre. La communication sur le canal HF permet au lecteur d'alimenter suffisamment l'étiquette en énergie pour que celle-ci procède aux calculs cryptographiques lui permettant d'authentifier le lecteur. L'authentification mutuelle entre le lecteur et l'étiquette se fait ainsi en deux phases indépendantes, via deux canaux de communication différents.

Lors d'une authentification mutuelle, lorsqu'une étiquette est adaptée pour communiquer sur différents canaux de communications et que différents canaux sont effectivement utilisés pour cette authentification mutuelle, il est habituel de mettre en oeuvre une première session d'authentification sur un premier canal de communication et une deuxième session d'authentification sur un deuxième canal. La première session correspond par exemple à l'authentification de l'étiquette par le lecteur et la deuxième session à l'authentification du lecteur par l'étiquette. Les deux sessions sont indépendantes. Chacune de ces phases nécessite d'échanger un certain nombre de messages.

Un des buts de l'invention est de remédier à des insuffisances/inconvénients de l'état de la technique et/ou d'y apporter des améliorations.

A cette fin, l'invention propose un procédé d'authentification mutuelle entre une étiquette radio et un lecteur radio, comprenant les étapes suivantes, mises en oeuvre par l'étiquette radio :
- une étape d'envoi au lecteur radio d'un premier coupon d'authentification,
- une étape de réception, en provenance du lecteur, d'un deuxième coupon d'authentification, ledit deuxième coupon étant reçu après l'envoi du premier coupon d'authentification,
- une étape d'envoi d'une première réponse d'authentification, la première réponse d'authentification étant calculée à partir d'un premier défi, calculé à partir du deuxième coupon d'authentification,
- une étape de réception, en provenance du lecteur, d'une deuxième réponse d'authentification, la deuxième réponse d'authentification étant calculée par le lecteur à partir d'un deuxième défi, calculé à partir de la première réponse d'authentification.

L'invention porte également sur procédé d'authentification mutuelle entre un lecteur et une étiquette radio, comprenant les étapes suivantes, mises en oeuvre par le lecteur :
- une étape de réception, en provenance de l'étiquette, d'un premier coupon d'authentification,
- une étape d'envoi à l'étiquette, d'un deuxième coupon d'authentification, ledit deuxième coupon étant envoyé après la réception du premier coupon d'authentification,
- une étape de réception, en provenance de l'étiquette, d'une première réponse d'authentification, la première réponse d'authentification étant calculée par l'étiquette à partir d'un premier défi, obtenu à partir du deuxième coupon d'authentification,
- une étape d'envoi à l'étiquette d'une deuxième réponse d'authentification, la deuxième réponse d'authentification étant calculée à partir d'un deuxième défi, obtenu à partir de la première réponse d'authentification.

Avec le procédé selon l'invention, le nombre de messages échangés entre le lecteur et l'étiquette au cours de cette authentification mutuelle est moindre que si l'on avait mis en oeuvre une authentification de l'étiquette par le lecteur suivie d'une authentification du lecteur par l'étiquette, selon des méthodes connues. En effet, de telles méthodes reposent habituellement sur l'échange d'un engagement, d'un défi et d'une réponse. Avec la méthode décrite ici, le premier défi qui est utilisé lors de l'authentification de l'étiquette par le lecteur est calculé à partir du deuxième coupon d'authentification envoyé par le lecteur à l'étiquette et reçu après envoi par l'étiquette d'un engagement, en l'espèce le premier coupon d'authentification. De même, le deuxième défi, utilisé lors de l'authentification du lecteur par l'étiquette est calculé à partir de la première réponse d'authentification reçue de l'étiquette. Les défis ne sont donc plus transmis explicitement entre l'étiquette et le lecteur. Le nombre de messages échangés est donc moindre. Dans le cas de cryptoGPS, le nombre de messages échangés passe de 6 à 4. Ainsi, la gestion de l'énergie, utilisée par les deux entités pour la transmission des messages est optimisée par rapport au cas habituel. Par ailleurs, la sécurité de l'authentification est garantie puisque le premier défi n'étant connu de l'étiquette qu'après envoi du premier coupon d'authentification, il est impossible pour une étiquette malhonnête, de calculer la première réponse d'authentification sans la connaissance de la clé secrète attribuée à l'étiquette. De même, le deuxième défi n'est connu du lecteur qu'après envoi de l'engagement, en l'espèce le deuxième coupon d'authentification. Il est donc impossible pour un lecteur malhonnête de calculer la deuxième réponse d'authentification sans la connaissance de la clé secrète attribuée au lecteur.

Avantageusement, le procédé d'authentification mutuelle entre une étiquette radio et un lecteur radio comprend :
- une phase d'authentification de l'étiquette par le lecteur, mise en oeuvre sur un premier canal de communication, durant laquelle le premier coupon d'authentification et la première réponse d'authentification sont envoyés de l'étiquette au lecteur,
- une étape de basculement du premier canal de communication vers un deuxième canal de communication, différent du premier canal, sur lequel est mise en oeuvre une phase d'authentification du lecteur par l'étiquette durant laquelle le deuxième coupon d'authentification et la deuxième réponse d'authentification sont reçus du lecteur, caractérisé en ce que le deuxième coupon d'authentification est transmis sur le premier canal de communication.

Lorsque différents canaux de communication sont utilisés au cours d'une authentification mutuelle entre deux entités telles qu'une étiquette radio passive et un lecteur radio, il est établi dans le domaine de la communication sur la voie radio que la première authentification, mise en oeuvre sur le premier canal est indépendante de la deuxième authentification, mise en oeuvre sur le deuxième canal de communication. Ainsi, les deux authentifications consistent en deux sessions d'authentification indépendantes successives. Le procédé de l'invention propose d'entremêler les sessions d'authentification ; il va donc à l'encontre des pratiques courantes. Plus précisément, le procédé propose de transmettre sur le premier canal de communication utilisé pour mettre en oeuvre une première authentification une donnée habituellement utilisée pour mettre en oeuvre la deuxième authentification ; cette donnée, en l'espèce le deuxième coupon d'authentification, est donc habituellement transmise sur le deuxième canal de communication durant la deuxième authentification. Transmettre cette donnée sur le premier canal de communication, durant la première authentification permet d'optimiser le nombre de messages échangés. Le procédé selon l'invention permet ainsi d'optimiser le protocole d'authentification mutuelle en termes de complexité et en termes de données transmises entre les deux entités. Dans le cas du protocole cryptoGPS le nombre de messages échangés passe de 6 à 4. De telles optimisations sont considérables pour des étiquettes qui sont très contraintes en termes de puissance de calcul et de mémoire. Les authentifications de l'étiquette par le lecteur et du lecteur par l'étiquette sont par ailleurs toujours conformes à un protocole classique à trois passes qui comprend un engagement, un défi et une réponse. Ainsi, la sécurité du procédé est toujours garantie. L'authentification du lecteur par l'étiquette, mise en oeuvre sur le deuxième canal est par ailleurs plus rapide avec le procédé selon l'invention, puisque qu'un seul message est envoyé du lecteur à l'étiquette. D'autre part, la plupart des données utilisées durant cette phase peuvent être calculées au cours de la première phase.

L'invention tire son origine d'un problème lié aux étiquettes passives qui reçoivent leur énergie du lecteur lorsque celui-ci se trouve à proximité. L'invention est cependant applicable aux autres étiquettes, notamment celles équipées d'une batterie, et présente des avantages en termes de consommation, d'économie de la bande passante et de rapidité d'exécution.

Selon un exemple de réalisation de l'invention, le deuxième coupon d'authentification est utilisé par l'étiquette pour calculer la première réponse d'authentification.

La première réponse est calculée selon l'invention au moyen du deuxième coupon d'authentification reçu du lecteur. Ainsi, le deuxième coupon joue le rôle d'un défi qui est habituellement utilisé dans un protocole à trois passes comprenant un engagement ou premier coupon d'authentification, un défi et une première réponse. L'authentification de l'étiquette mise en oeuvre par le procédé d'authentification mutuelle selon l'invention, apporte donc les mêmes garanties de sécurité que le protocole d'authentification mutuelle classique dans lequel les deux sessions d'authentification sont indépendantes l'une de l'autre.

Selon un exemple de réalisation de l'invention, la première réponse d'authentification est utilisée par le lecteur pour calculer la deuxième réponse d'authentification.

La deuxième réponse d'authentification fournie par le lecteur à l'étiquette pour s'authentifier auprès de l'étiquette est calculée au moyen de la première réponse d'authentification. Ainsi, l'authentification du lecteur, telle que mise en oeuvre par le procédé d'authentification mutuelle selon l'invention, reste conforme à un protocole à trois passes. Il apporte donc les mêmes garanties de sécurité que le protocole d'authentification mutuelle lorsque l'authentification du lecteur est mise en oeuvre au cours d'une session d'authentification indépendante de la session d'authentification de l'étiquette.

Selon un exemple de réalisation de l'invention, le procédé de l'invention comprend les étapes suivantes, mises en oeuvre par l'étiquette :
- envoi sur le premier canal de communication du premier coupon d'authentification,
- réception sur le premier canal de communication du deuxième coupon d'authentification,
- envoi sur le premier canal de communication de la première réponse d'authentification,
- basculement du premier canal de communication vers le deuxième canal de communication,
- réception sur le deuxième canal de communication de la deuxième réponse d'authentification, et
- vérification que le deuxième coupon d'authentification est égal à une valeur calculée à partir de la deuxième réponse d'authentification.

Les étapes décrites ici sont celles mises en oeuvre par l'étiquette. Le deuxième coupon d'authentification, habituellement transmis lors de l'authentification du lecteur sur le deuxième canal de communication est transmis sur le premier canal de communication. Il permet ainsi à l'étiquette de calculer la première réponse d'authentification, destinée à être utilisé pour l'authentification de l'étiquette auprès du lecteur. Par ailleurs, l'étiquette utilise la première réponse d'authentification qu'elle a calculée pour vérifier la deuxième réponse d'authentification reçue du lecteur sur le deuxième canal.

Selon cet exemple de réalisation de l'invention, le procédé comprend les étapes suivantes, mises en oeuvre par le lecteur :
- réception sur le premier canal de communication, du premier coupon d'authentification,
- envoi sur le premier canal de communication, du deuxième coupon d'authentification,
- réception sur le premier canal de communication, de la première réponse d'authentification,
- vérification que le premier coupon d'authentification est égal à une valeur calculée à partir de la première réponse d'authentification,
- basculement du premier canal de communication vers le deuxième canal de communication,
- envoi sur le deuxième canal de communication d'une deuxième réponse d'authentification.

Les étapes décrites ici sont celles mises en oeuvre par le lecteur. Le deuxième coupon d'authentification est transmis sur le premier canal de communication. Il permet au lecteur de vérifier la réponse d'authentification reçue de l'étiquette, puisque l'étiquette a utilisé le deuxième coupon pour calculer la première réponse d'authentification. Par ailleurs, le lecteur utilise la première réponse d'authentification reçue sur le premier canal de communication pour calculer la deuxième réponse d'authentification qu'il transmet sur le deuxième canal.

Avantageusement, un premier défi, utilisé par l'étiquette pour calculer la première réponse d'authentification, est obtenu en appliquant une première fonction au deuxième coupon d'authentification.

La première fonction est utilisée par l'étiquette pour générer un défi à partir d'une donnée aléatoire, en l'espèce le deuxième coupon d'authentification reçu du lecteur. Ainsi, le défi obtenu est une donnée aléatoire qui n'est pas explicitement envoyée par le lecteur. Le procédé de l'invention, en entremêlant la session d'authentification de l'étiquette avec la session d'authentification du lecteur, permet ainsi de mutualiser l'envoi du deuxième coupon d'authentification et du défi habituellement envoyé dans un protocole à trois passes et d'obtenir le défi à partir du deuxième coupon.

Avantageusement, Procédé un deuxième défi, utilisé par le lecteur pour calculer la deuxième réponse d'authentification est obtenu en appliquant une deuxième fonction à la première réponse d'authentification.

De manière comparable à ce qui a été dit concernant la première fonction, la deuxième fonction permet au lecteur de générer le deuxième défi à partir de la première réponse d'authentification reçue de l'étiquette sur le premier canal. Ce deuxième défi possède un caractère aléatoire inhérent au caractère aléatoire de la réponse d'authentification et permet au lecteur de calculer la deuxième réponse d'authentification destinée à être envoyée à l'étiquette sur le deuxième canal. Ainsi, le procédé de l'invention permet de mutualiser l'envoi de la première réponse et du deuxième défi habituellement envoyé explicitement dans un protocole à trois passes et d'obtenir ce deuxième défi à partir de la première réponse.

Selon un exemple de réalisation de l'invention, la première fonction est identique à la deuxième fonction.

Dans cet exemple de réalisation, la fonction utilisée par l'étiquette et le lecteur pour générer le premier défi est la même fonction que celle utilisée par le lecteur et l'étiquette pour générer le deuxième défi. Ainsi, l'étiquette n'a à mémoriser qu'une seule fonction. Cette optimisation est intéressante pour une étiquette dont l'espace mémoire de l'étiquette peut être très limité.

Dans un exemple de réalisation de l'invention, le premier canal de communication est un canal UHF, ou Ultra Haute Fréquence, et le deuxième canal de communication est un canal HF, ou Haute Fréquence.

La fréquence HF est utilisée dans les communications en champ proche. En particulier, de nombreux services NFC, tels que par exemple des services de transport l'utilisent. Avec un tel service, un utilisateur est muni d'une carte qui embarque une étiquette radio ; l'utilisateur doit présenter sa carte auprès d'une borne radio afin d'accéder au moyen de transport. Il peut être intéressant pour de tels services d'optimiser une authentification mutuelle de manière à ce que la première session d'authentification au cours de laquelle l'étiquette, donc l'usager, s'authentifie auprès du lecteur se déroule sur le canal UHF lorsque celui-ci est à une certaine distance de la borne. Ainsi, lorsque l'usager est à une très courte distance de la borne et présente sa carte auprès de la borne, l'authentification du lecteur par celle-ci sur le canal HF est très rapide. Cela peut permettre d'augmenter le débit d'usagers auprès de la borne.

L'invention concerne également un lecteur radio agencé pour s'authentifier auprès d'au moins une étiquette radio et pour authentifier l'étiquette, et comprenant :
- des moyens de réception, agencés pour recevoir sur un premier canal de communication, un premier coupon d'authentification et une première réponse d'authentification,
- des premiers moyens d'envoi, agencés pour envoyer sur le premier canal de communication, un deuxième coupon d'authentification,
- des deuxièmes moyens d'envoi, agencés pour envoyer sur un deuxième canal de communication, différent du premier canal, une deuxième réponse d'authentification,
- des moyens de basculement, agencés pour passer du premier canal de communication vers le deuxième canal de communication,
- des moyens de vérification, agencés pour vérifier que le premier coupon d'authentification est égal à une valeur calculée à partir de la première réponse d'authentification.

L'invention concerne aussi un terminal mobile comprenant un lecteur radio selon l'invention.

Un tel cas d'usage permet d'envisager des services où l'utilisateur, équipé de son terminal mobile lit des étiquettes radio au cours d'un protocole sécurisé. Ainsi, le terminal mobile peut être utilisé dans des chaînes de production d'usine, dans la protection de contenus numériques, etc.

L'invention porte aussi sur une étiquette radio adaptée pour authentifier un lecteur radio et pour s'authentifier auprès du lecteur, et comprenant :
- des moyens d'envoi, agencés pour envoyer sur un premier canal de communication un premier coupon d'authentification et une première réponse d'authentification,
- des premiers moyens de réception, agencés pour recevoir sur le premier canal de communication un deuxième coupon d'authentification,
- des deuxièmes moyens de réception, agencés pour recevoir sur un deuxième canal de communication, différent du premier canal, une deuxième réponse d'authentification,
- des moyens de basculement, agencés pour passer du premier canal de communication vers le deuxième canal de communication,
- des moyens de vérification, agencés pour vérifier que le deuxième jeton d'authentification est égal à une valeur calculée à partir de la deuxième réponse d'authentification.

L'invention concerne aussi un système d'authentification radio comprenant :
- un lecteur radio selon l'invention, et
- au moins une étiquette radio selon l'invention.

L'invention concerne également un programme d'ordinateur destiné à être installé dans une mémoire d'un lecteur radio, comprenant des instructions pour la mise en oeuvre des étapes du procédé d'authentification mutuelle d'une étiquette radio et d'un lecteur selon invention qui sont exécutées par le lecteur, lorsque le programme est exécuté par un processeur.

L'invention concerne enfin un support de données sur lequel est enregistré le programme d'ordinateur selon l'invention.

De nombreux détails et avantages de l'invention seront mieux compris à la lecture de la description d'un mode particulier de réalisation en référence aux dessins annexés donnés à titre non limitatif, et dans lesquels :
- la figure 1 présente les étapes d'un schéma d'authentification mutuelle connu entre une étiquette et un lecteur, en l'espèce le schéma cryptoGPS, selon un état antérieur de la technique ;
- la figure 2 présente les étapes d'un procédé d'authentification mutuelle entre une étiquette et un lecteur radio, selon un premier exemple de réalisation de l'invention ;
- la figure 3 représente un exemple particulier de réalisation d'une étiquette radio agencée pour authentifier un lecteur radio selon l'invention et décrit en relation avec la figure 4 ;
- la figure 4 représente un exemple de réalisation d'un lecteur radio agencé pour s'authentifier auprès d'une étiquette radio décrite en relation avec la figure 3.

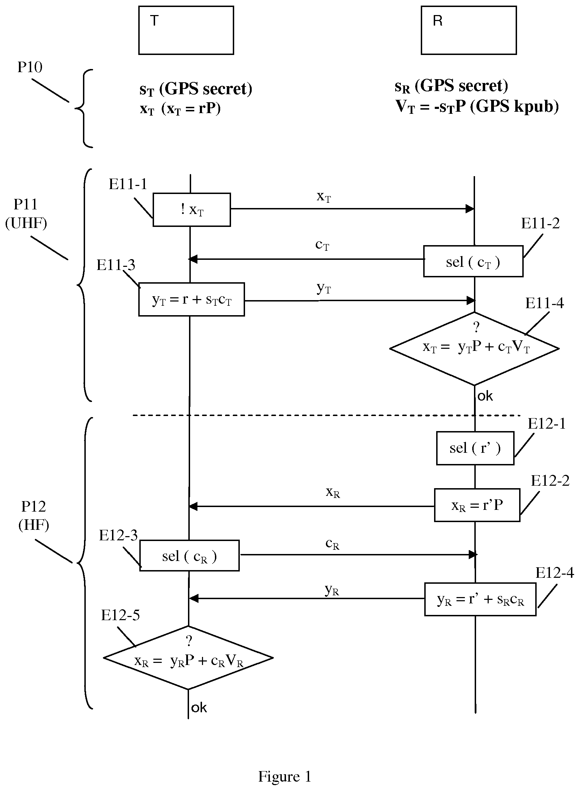

Les étapes d'un procédé d'authentification mutuelle entre une étiquette radio et un lecteur radio, selon un exemple connu de l'état de la technique, vont maintenant être décrites en relation avec la figure 1.

Dans cet exemple, une authentification d'une l'étiquette passive T, qui reçoit son énergie d'un lecteur R lorsqu'il est à proximité, par le lecteur R a lieu sur un premier canal de communication, par exemple le canal UHF. Cette authentification s'exécute en trois passes et comprend : un engagement de l'étiquette T, un défi du lecteur R et une réponse de l'étiquette T (on parle habituellement de « commitment, challenge, response ») ; elle est suivie par une authentification du lecteur R par l'étiquette T sur un deuxième canal de communication, par exemple le canal HF. Cette authentification comprend également un engagement du lecteur R, un défi de l'étiquette T et une réponse du lecteur R. Les deux sessions sont indépendantes l'une de l'autre et sont exécutées successivement.

Le schéma d'authentification mutuelle décrit ici est le schéma "GPS" (ou "cryptoGPS"), du nom des inventeurs "Girault, Paillès, Poupard, et Stern" [M. Girault, G. Poupard and J. Stern. "On the Fly Authentication and Signature Schemes Based on Groups of Unknown Order", Journal of Cryptology, pages 463-488, volume 19, number 4, 2006]. Le schéma cryptoGPS est une technique d'authentification à clé publique. C'est un protocole de type "zero-knowledge" (ou "à divulgation nulle de connaissance") dont la sécurité repose sur la difficulté du logarithme discret dans un groupe. Ce schéma est habituellement utilisé pour qu'un dispositif très peu puissant, en termes de mémoire ou/et de puissance de calcul, s'authentifie auprès d'un deuxième dispositif, plus puissant.

Selon ce schéma, un système d'authentification comprend au moins l'étiquette passive T, adaptée pour s'authentifier auprès d'un lecteur R lorsqu'elle passe à proximité du lecteur R, et pour authentifier le lecteur R. On suppose que le lecteur R et l'étiquette T sont adaptés pour communiquer sur différents canaux de communication, chacun de ces canaux utilisant une bande de fréquence particulière.

Le schéma comprend de manière classique trois phases : une phase de configuration P10, au cours de laquelle des données de configuration sont fournies à l'étiquette T et au lecteur R, une première phase d'authentification P11 au cours de laquelle le lecteur R authentifie l'étiquette T, et une deuxième phase d'authentification P12 au cours de laquelle l'étiquette T authentifie le lecteur R. La phase de configuration P10 peut n'être exécutée qu'une fois dans la vie du système. Les phases d'authentification P11 et P12 sont exécutées à chaque authentification mutuelle entre l'étiquette T et le lecteur R. La première phase d'authentification P11 est mise en oeuvre sur un premier canal de communication, par exemple sur un canal UHF dont la gamme de fréquences se situe aux alentours de 890 MHz, en fonction de régulations locales, et peut être exécutée lorsque le lecteur R se trouve à une distance de l'ordre d'un ou quelques mètres de l'étiquette T. La deuxième phase d'authentification P12 est mise en oeuvre sur un deuxième canal de communication de type HF de fréquence 13,56 MHz et peut être exécutée lorsque le lecteur R se trouve à une distance de l'ordre d'une dizaine de centimètres de l'étiquette T. En effet, l'étiquette T, qui reçoit son énergie du lecteur R, a besoin, pour cette phase d'être suffisamment alimentée pour pouvoir effectuer un calcul cryptographique nécessaire à l'authentification du lecteur R. Cette alimentation est insuffisante lorsque le lecteur R et l'étiquette T communiquent sur le canal UHF.

Au cours de la phase de configuration P10, deux couples de clés cryptoGPS (s_{T}, V_{T}) et (s_{R}, V_{R}) sont générés. Les couples comprennent une clé secrète *s_{T},* respectivement *s_{R}*, et une clé publique associée V_{T}, respectivement V_{R}. La clé secrète *s_{T},* propre à l'étiquette T, est stockée dans l'étiquette T et n'est jamais extraite, ni transmise hors de l'étiquette T. La clé secrète *s_{R}*, propre au lecteur R, est stockée dans le lecteur R et n'est jamais extraite, ni transmise hors du lecteur R. La clé publique V_{T} associée à la clé secrète *s_{T}* de l'étiquette T est accessible par le lecteur R. La clé publique V_{R} associée à la clé secrète *s_{R}* du lecteur R est accessible par l'étiquette T au cours de l'exécution du protocole d'authentification. Les clés *s_{T}* et V_{T}, respectivement *s_{R}* et V_{R}, sont liées par exemple selon la formule suivante : *V_{T}* = *-s_{T}P*, respectivement : *V_{R}* = -*s_{R}P,* où P est un point sur la courbe elliptique E connu du lecteur R et de l'étiquette T. Dans une variante, *V_{T}* = *s_{R}P*, respectivement *V_{R} = s_{R}P* . Autrement dit, la clé publique V_{T}, respectivement la clé publique V_{R}, est calculée selon l'addition sur la courbe elliptique en additionnant le point P, *s_{T}* fois, respectivement *s_{R}* fois. L'étiquette T mémorise également un ou plusieurs coupons d'authentification destinés à être utilisés comme engagement lors de l'authentification de l'étiquette T par le lecteur R. Un coupon d'authentification *x_{T}* peut ainsi être pré-calculé par l'étiquette T selon la formule suivante : *x_{T}* = *rP*, où r est un premier aléa choisi par l'étiquette T. Autrement dit, le coupon *x_{T}* est calculé selon l'addition sur la courbe elliptique, en additionnant le point P, r fois. L'étiquette T mémorise le coupon pré-calculé en association avec le premier aléa r.

Au cours de la première phase d'authentification P11, durant laquelle le lecteur R authentifie l'étiquette T, dans une étape initiale E11-1 d'envoi d'un coupon, l'étiquette T envoie au lecteur R le coupon *x_{T}* qu'elle a mémorisé lors de la phase de configuration P10.

Dans une étape E11-2 de sélection et d'envoi d'un défi, il est généré par le lecteur R un défi *c_{T}.* Le défi *c_{T}* est généré aléatoirement. En fin d'étape E11-2, le défi *c_{T}* est envoyé par le lecteur R à l'étiquette T.

Dans une étape E11-3 de calcul et d'envoi d'une réponse, il est calculé par l'étiquette T une réponse d'authentification *y_{T}* au défi *c_{T}* au moyen de la formule suivante : *y_{T}* = *r* + *s_{T} c_{T}* . La réponse *y_{T}* est la somme du premier aléa r, utilisé pour généré le coupon d'authentification *x_{T},* et du produit scalaire de la clé secrète *s_{T}* et du défi *c_{T}.* En fin d'étape E11-3, la réponse d'authentification *y_{T}* est envoyée au lecteur R.

Dans une étape E11-4 de vérification, il est vérifié par le lecteur R que le coupon d'authentification *x_{T}* reçu de l'étiquette en fin d'étape E11-3 est égal à une valeur obtenue par addition d'une première valeur obtenue par addition sur la courbe elliptique du point P, *y_{T}* fois, et d'une deuxième valeur obtenue par addition sur la courbe elliptique de la clé publique V_{T}, *c_{T}* fois. Autrement dit que le coupon *x_{T}* est égal à : *y_{T}P* + *c_{T}V_{T}.*

Si la vérification est positive (branche ok sur la figure 1), alors l'étiquette T s'est correctement authentifiée auprès du lecteur R.

Cette première authentification permet à l'étiquette T de s'authentifier auprès du lecteur R. Les échanges effectués entre l'étiquette T et le lecteur R ont lieu sur un premier canal de communication, par exemple le canal UHF.

Dans la deuxième phase de l'authentification mutuelle P12, comparable à la première phase d'authentification P11, il est procédé à l'authentification du lecteur R auprès de l'étiquette T, selon les échanges suivants, comparables aux échanges réalisés précédemment.

Cependant, il n'est pas possible d'effectuer l'authentification du lecteur R par l'étiquette T sur le canal de communication UHF choisi pour réaliser l'authentification de l'étiquette T par le lecteur R. En effet, le canal UHF ne permet pas au lecteur R de fournir suffisamment d'énergie à l'étiquette T pour que celle-ci puisse effectuer des calculs cryptographiques nécessaires à l'authentification du lecteur R. Ainsi, pour mettre en oeuvre cette deuxième phase authentification P12, il est nécessaire de changer de canal de communication et de passer sur un canal de communication qui permet au lecteur R de fournir suffisamment d'énergie à l'étiquette T pour que celle-ci puisse mettre en oeuvre les calculs cryptographiques nécessaires à l'authentification du lecteur R. Ce changement de canal est possible en rapprochant le lecteur R de l'étiquette T, apte à fonctionner sur différents canaux de communication, jusqu'à une distance de l'ordre d'une dizaine de centimètres. Une fois ce rapprochement effectué, l'étiquette T reçoit suffisamment d'énergie du lecteur R pour répondre à des sollicitations du lecteur sur le deuxième canal et pour demander à authentifier le lecteur. Le lecteur R peut alors sélectionner le deuxième canal pour dialoguer avec l'étiquette T et s'authentifier auprès de l'étiquette T.

Durant cette deuxième phase P12, dans une étape E12-1 de sélection, le lecteur R sélectionne un deuxième aléa r'. Dans une étape suivante E12-2 de calcul et d'envoi, le lecteur R calcule un deuxième coupon d'authentification *x_{R}* selon la formule suivante : *x_{R}* = *r'P.* Autrement dit, *x_{R}* est calculé selon l'addition sur la courbe elliptique en additionnant le point P, r' fois. Dans un autre exemple d'exécution du protocole d'authentification, le deuxième coupon *x_{R}* peut être pré-calculé par le lecteur R et mémorisé durant la phase de configuration P10. Cependant, le lecteur R est moins contraint que l'étiquette T en termes de puissance de calcul et peut calculer le deuxième coupon durant la deuxième phase d'authentification P12. Le deuxième coupon *x_{R}* est envoyé à l'étiquette T par le lecteur R en fin d'étape E12-2.

Dans une étape E12-3 de sélection et d'envoi d'un défi, il est généré par l'étiquette T un deuxième défi *c_{R}.* Le deuxième défi *c_{R}* est généré aléatoirement. En fin d'étape E12-3, le deuxième défi *c_{R}* est envoyé par le l'étiquette T au lecteur R.

Dans une étape E12-4 de calcul et d'envoi, il est ensuite calculé par le lecteur R une deuxième réponse d'authentification *y_{R}* au moyen de la formule suivante : *y_{R}* = *r'*+*s_{R}c_{R}.* La deuxième réponse *y_{R}* est la somme de l'aléa r' et du produit scalaire de la clé secrète *s_{R}* et du deuxième défi *c_{R}.* En fin d'étape E12-4, le lecteur R envoie la deuxième réponse *yᵣ* à l'étiquette T.

Dans une étape E12-5 de vérification, l'étiquette T vérifie que le deuxième coupon *xᵣ* reçu du lecteur R en fin d'étape E12-2 est égal à une valeur obtenue par addition d'une première valeur obtenue par addition sur la courbe elliptique du point P, *y_{R}* fois, et d'une deuxième valeur obtenue par addition sur la courbe elliptique de la clé publique V_{R}, *c_{R}* fois. Autrement dit que le deuxième coupon *x_{R}* est égal à : *y_{R}P* + *c_{R}V_{R}.*

Si la vérification est positive (branche ok sur la figure 1), alors le lecteur R s'est correctement authentifié auprès de l'étiquette T.

Ainsi au terme des phases P11 et P12, l'étiquette T et le lecteur R se sont mutuellement authentifiés.

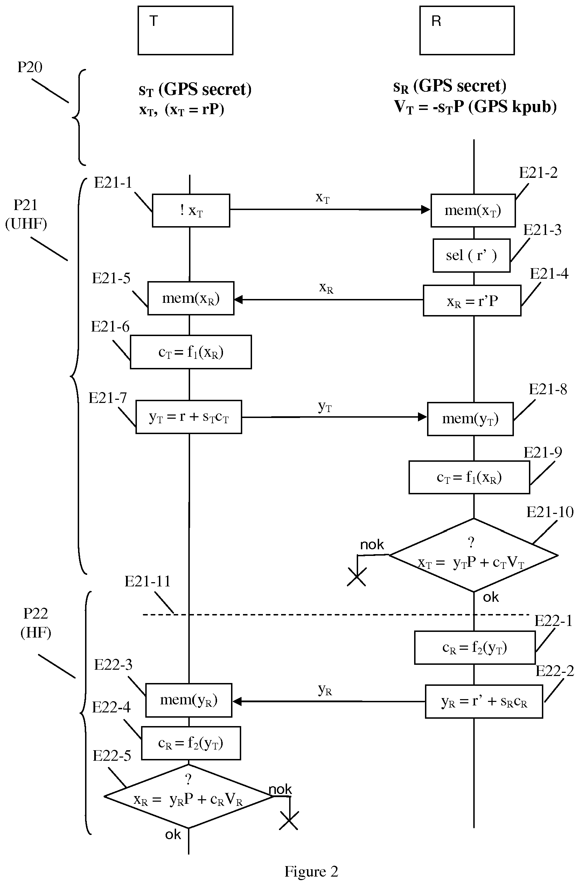

Les étapes d'un procédé d'authentification mutuelle entre une étiquette radio et un lecteur radio, selon un premier exemple de réalisation vont maintenant être décrites en relation avec la figure 2.

Le procédé d'authentification mutuel décrit ici est basé sur le schéma cryptographique cryptoGPS tel que décrit précédemment. L'étiquette T est un dispositif passif qui reçoit son énergie du lecteur R. L'étiquette T et le lecteur R sont agencés pour communiquer, à un niveau couche physique, sur différentes bandes de fréquence, fonction par exemple de la distance qui les sépare.

L'exemple décrit ici est basé sur les courbes elliptiques ; il utilise un sous-groupe de points générés par un point P sur une courbe E.

Selon ce schéma, un système d'authentification comprend au moins l'étiquette T adaptée pour s'authentifier auprès du lecteur R lorsqu'elle passe à proximité du lecteur R, et pour authentifier le lecteur R.

De manière similaire au procédé décrit en relation avec la figure 1, le schéma comprend trois phases : une phase de configuration P20, au cours de laquelle des données de configuration sont fournies à l'étiquette T et au lecteur R, une première phase d'authentification P21 au cours de laquelle l'étiquette T s'authentifie auprès du lecteur R, et une deuxième phase d'authentification P22 au cours de laquelle l'étiquette authentifie le lecteur R. La phase de configuration P20 peut n'être exécutée qu'une fois dans la vie du système. Les phases d'authentification P21 et P22 sont exécutées à chaque authentification mutuelle entre l'étiquette T et le lecteur R. La première phase d'authentification P21 est mise en oeuvre sur un premier canal de communication, par exemple sur un canal UHF et peut être exécutée lorsque le lecteur se trouve à une distance de l'ordre d'un à quelques mètres de l'étiquette. La deuxième phase d'authentification P22 est mise en oeuvre sur un deuxième canal de communication, par exemple un canal de type HF et peut être exécutée lorsque le lecteur se trouve à une distance de l'ordre d'une dizaine de centimètres de l'étiquette. La proximité du lecteur R et donc l'utilisation du canal HF possible à cette distance permet au lecteur R de fournir à l'étiquette T suffisamment d'énergie pour permettre à celle-ci d'effectuer les calculs cryptographiques coûteux en termes de puissance de calcul et nécessaires à l'authentification du lecteur R.

Au cours de la phase de configuration P20, deux couples de clés cryptoGPS (s_{T}, V_{T}) et (s_{R}, V_{R}) sont générés. Les couples comprennent une clé secrète *s_{T},* respectivement *s_{R}*, et une clé publique associée V_{T}, respectivement V_{R}. La clé secrète *s_{T},* propre à l'étiquette T, est stockée dans l'étiquette T et n'est jamais extraite, ni transmise hors de l'étiquette T. La clé secrète *s_{R}*, propre au lecteur R, est stockée dans le lecteur R et n'est jamais extraite, ni transmise hors du lecteur R. La clé publique V_{T} associée à la clé secrète *s_{T}* de l'étiquette T est accessible par le lecteur R. La clé publique V_{R} associée à la clé secrète *s_{R}* du lecteur R est accessible par l'étiquette T durant l'authentification du lecteur R. Les clés *s_{T}* et V_{T}, respectivement *s_{R}* et V_{R}, sont liées par exemple selon la formule suivante : *V_{T}* = -*s_{T}P*, respectivement : *V_{R}* = -*s_{R}P*, où P est un point sur la courbe elliptique E connu du lecteur R et de l'étiquette T. Dans une variante, *V_{T}* = *s_{R}P_{T}*, respectivement *V_{R}* = *s_{R}P_{R}*. Autrement dit, la clé publique V_{T}, respectivement la clé publique V_{R}, est calculée selon l'addition sur la courbe elliptique en additionnant le point P, *s_{T}* fois, respectivement *s_{R}* fois. L'étiquette mémorise également un ou plusieurs coupons d'authentification destinés à être utilisés comme engagement lors de l'authentification de l'étiquette T par le lecteur R. Un premier coupon d'authentification *x_{T}* peut ainsi être pré-calculé par l'étiquette T selon la formule suivante : *x_{T}* = *rP*, où r est un premier aléa choisi par l'étiquette T. Autrement dit, *x_{T}* est calculé selon l'addition sur la courbe elliptique, en additionnant le point P, r fois. L'étiquette T mémorise le coupon pré-calculé en association avec le premier aléa r.

Au cours de la première phase d'authentification P21, durant laquelle le lecteur R authentifie l'étiquette T, dans une étape initiale E21-1 d'envoi, l'étiquette envoie au lecteur R le premier coupon d'authentification *x_{T}* qu'elle a préalablement mémorisé. Le premier coupon *x_{T}* est reçu et mémorisé par le lecteur R dans une étape E21-2 de réception.

Dans une étape E21-3 de sélection, le lecteur R sélectionne un deuxième aléa r'. Le deuxième aléa r' peut être généré par le lecteur R au moyen d'un générateur pseudo-aléatoire.

Dans une étape E21-4 de calcul et d'envoi, il est calculé par le lecteur R un deuxième coupon d'authentification *x_{R}* selon la formule suivante : *x_{R}* = *r'P.* Autrement dit, *x_{R}* est calculé selon l'addition sur la courbe elliptique, en additionnant le point P, r' fois. Dans un autre exemple de réalisation du protocole d'authentification, le deuxième coupon *x_{R}* est pré-calculé et mémorisé par le lecteur R durant la phase de configuration P20 et dans ce cas, l'étape E21-3 de sélection et le calcul effectué au cours de l'étape E21-4 ne sont pas mis en oeuvre. Cependant, le lecteur R est moins contraint que l'étiquette T en termes de puissance de calcul et peut calculer le deuxième coupon *x_{R}* durant la première phase d'authentification P21. Le deuxième coupon *x_{R}* est envoyé à l'étiquette T en fin d'étape E21-4. Le deuxième coupon *x_{R}* est reçu et mémorisé par l'étiquette T dans une étape E21-5 de réception.

Dans une étape suivante E21-6 de génération d'un défi, il est généré un premier défi *c_{T}* par l'étiquette T. Dans cet exemple de réalisation, le premier défi *c_{T}* est généré en appliquant une fonction f₁ au deuxième coupon *x_{R}* reçu du lecteur R. La fonction f₁ consiste par exemple à tronquer le deuxième coupon *x_{R}* et à ne prendre qu'un nombre déterminé de bits de poids faible. Dans une variante de réalisation, le défi est obtenu en extrayant du coupon *x_{R}* le nombre déterminé de bits de poids fort. On remarque que la génération du deuxième coupon *x_{R}* basée sur un aléa est aléatoire. Le premier défi *c_{T}* conserve donc ce caractère aléatoire.

Dans une étape E21-7 de calcul d'une réponse et d'envoi, l'étiquette T calcule une première réponse d'authentification *y_{T}* au premier défi *c_{T}* . La première réponse d'authentification est calculée au moyen de la formule suivante : *y_{T}* = *r* + *s_{T} c_{T} .* La première réponse d'authentification *y_{T}* est la somme de l'aléa r, mémorisé par l'étiquette T en association avec le premier coupon *x_{T}* , et du produit scalaire de la clé secrète *s_{T}* et du premier défi *c_{T}.* En fin d'étape E21-7, la première réponse d'authentification *y_{T}* est envoyée au lecteur R. La première réponse d'authentification *y_{T}* est reçue et mémorisée par le lecteur R dans une étape E21-8.

Dans une étape suivante E21-9 d'obtention du défi, le lecteur R obtient le premier défi *c_{T}* à partir du deuxième coupon d'authentification *x_{R}* qu'il a généré au cours de l'étape E21-4. A cette fin, le lecteur R applique la même fonction f₁ que celle appliquée par l'étiquette T au deuxième coupon *x_{R}* au cours de l'étape E21-6. L'étape E21-9 d'obtention du défi n'est pas forcément consécutive à l'étape E21-8 de réception. Elle peut être mise en oeuvre après l'étape E21-4 de calcul et d'envoi du deuxième coupon d'authentification.

Dans une étape suivante E21-10 de vérification, il est vérifié par le lecteur R que le premier coupon *x_{T}* reçu de l'étiquette T à l'étape E21-2 est égal à une valeur obtenue par addition d'une première valeur obtenue par addition sur la courbe elliptique du point P, *y_{T}* fois, et d'une deuxième valeur obtenue par addition sur la courbe elliptique de la clé publique V_{T}, *c_{T}* fois. Autrement dit que le premier coupon d'authentification *x_{T}* est égal à : *y_{T}P* + *c_{T}V_{T}.*

Si la vérification est négative (branche « nok » sur la figure 2), alors le procédé s'arrête, l'authentification de l'étiquette T ayant échoué.

Si la vérification est positive (branche « ok » sur la figure 2), cela signifie que l'étiquette T s'est correctement authentifiée auprès du lecteur R.

Dans une étape E21-11 de changement de canal, matérialisée sur la figure 2 par un trait horizontal en pointillés, il y a basculement du premier canal vers un deuxième canal de communication. Ainsi, la communication qui était précédemment établie dans la bande de fréquence UHF passe dans une deuxième bande fréquence, par exemple la bande de fréquence HF. On considère que ce changement s'effectue automatiquement lorsque le lecteur R se rapproche de l'étiquette T jusqu'à être à une distance inférieure à une dizaine de centimètres. A cette distance, l'étiquette T, adaptée pour communiquer sur plusieurs canaux de communication est apte à choisir de passer du premier canal au deuxième canal. Le deuxième canal HF permet à l'étiquette T de recevoir plus d'énergie du lecteur R qui l'alimente et lui permet de mettre en oeuvre la deuxième phase d'authentification correspondant à l'authentification du lecteur par l'étiquette. Le lecteur R peut sélectionner le deuxième canal, sur lequel l'étiquette émet, pour dialoguer avec l'étiquette et s'authentifier auprès d'elle.

Dans une étape E22-1 de génération d'un deuxième défi, le lecteur R génère un deuxième défi *c_{R}* à partir de la première réponse d'authentification *y_{T}* reçue de l'étiquette T au cours de la phase P21 d'authentification de l'étiquette T. La première réponse d'authentification y_{T} possède un caractère aléatoire, du fait de l'utilisation pour son calcul de l'aléa r et confère donc un caractère aléatoire au deuxième défi *c_{R}.* Dans cet exemple de réalisation, le défi est généré en appliquant une deuxième fonction f₂ à la première réponse d'authentification *y_{T}.* Dans cet exemple de réalisation, la fonction f₂ est identique à la fonction f₁ utilisée par l'étiquette T au cours de l'étape E21-6 de génération d'un défi. Il est avantageux pour l'étiquette T que les fonctions f₁ et f₂ soient identiques. En effet, cela permet à l'étiquette, qui peut être très contrainte en termes d'espace mémoire, de ne mémoriser qu'une fonction. Dans cet exemple, le deuxième défi *c_{R}* est ainsi obtenu en tronquant la première réponse d'authentification *y_{T}* et en extrayant un nombre déterminé de bits de poids faible. Dans un autre exemple de réalisation de l'invention, la deuxième fonction f₂ est différente de la première fonction f₁.

Dans une étape suivante E22-2 de calcul d'une deuxième réponse d'authentification et d'envoi, le lecteur R calcule une deuxième réponse d'authentification *y_{R}* au défi *c_{R}* au moyen de la formule suivante : *y_{R}* = *r'* + s*_{R} c_{R} .* La deuxième réponse d'authentification *y_{R}* est la somme de l'aléa r' et du produit scalaire de la clé secrète *s_{R}* et du défi *c_{R}.* En fin d'étape E22-2, le lecteur R envoie la deuxième réponse *y_{R}* à l'étiquette T. La deuxième réponse d'authentification *y_{R}* est reçue et mémorisée par l'étiquette dans une étape E22-3.

Dans une étape E22-4 d'obtention du défi, l'étiquette T déduit le deuxième défi *c_{R}* de la première réponse d'authentification *y_{T}* qu'elle a calculée au cours de l'étape E21-7 de calcul d'une réponse. A cette fin, l'étiquette T applique la même fonction f₂ que celle appliquée par le lecteur R au premier coupon *x_{T}* au cours de l'étape E22-1. Dans cet exemple de réalisation où la fonction f₁ est identique à la fonction f₂, l'étiquette applique donc la même fonction que celle utilisée pour générer le premier défi *c_{T}*. L'étape E22-4 n'est pas forcément consécutive à l'étape E22-3 de réception. Elle peut être mise en oeuvre parallèlement à l'étape de génération E22-1 mise en oeuvre par le lecteur R. Elle peut également être mise en oeuvre lors de la première phase d'authentification P21, après l'étape E21-2 de génération du premier coupon d'authentification *x_{T}.*

Dans une étape suivante E22-5 de vérification, l'étiquette T procède à la vérification de la deuxième réponse d'authentification *y_{R}* reçue du lecteur R. A cette fin, l'étiquette T vérifie que le deuxième coupon d'authentification *x_{R}* reçu du lecteur R au cours de l'étape E21-6 est égal à une valeur obtenue par addition d'une première valeur obtenue par addition sur la courbe elliptique du point P, *y_{R}* fois, et d'une deuxième valeur obtenue par addition sur la courbe elliptique de la clé publique V_{R}, *c_{R}* fois. Autrement dit que le deuxième coupon d'authentification *x_{R}* est égal à : *y_{R}P* + *c_{R}V_{R}.*

Si la vérification est positive (branche ok sur la figure 2) alors l'étiquette a authentifié positivement le lecteur R. Si la vérification est négative (branche nok) sur la figure 2, le procédé se termine sans que le lecteur R ait été authentifié.

Dans un autre exemple de réalisation de l'invention, les étapes E22-1 de génération du deuxième défi par le lecteur R et l'étape E22-4 d'obtention du deuxième défi par l'étiquette T sont mises en oeuvre au cours de la première phase d'authentification P21, lorsque l'étiquette T et le lecteur R dialoguent sur le premier canal de communication. Cet exemple constitue une optimisation du procédé. En effet, l'authentification du lecteur R sur le deuxième canal est alors plus rapide puisque le défi n'a plus besoin d'être calculé d'une part par le lecteur R et d'autre part par l'étiquette T.

Dans l'exemple de réalisation décrit précédemment, l'étiquette T et le lecteur R mémorisent les fonctions f₁ et f₂ qui permettent respectivement de déduire des premier *x_{T}* et deuxième *x_{R}* coupons les premier *c_{T}* et deuxième défis *c_{R}* . Lorsque les fonctions f₁ et f₂ sont identiques, l'étiquette n'a à mémoriser qu'une seule fonction ce qui est un avantage lorsque l'étiquette est limitée en termes d'espace mémoire.

Il est habituel de considérer les deux authentifications, c'est-à-dire l'authentification de l'étiquette T par le lecteur R et l'authentification du lecteur R par l'étiquette T, comme deux authentifications complètement indépendantes, qui sont mises en oeuvre dans des sessions distinctes. Entremêler ces deux sessions de manière à ce que des données habituellement générées au cours de chacune des authentifications soient générées au cours de la première authentification correspondant à l'authentification de l'étiquette, et que des données utilisées au cours de l'authentification de l'étiquette soient utilisées au cours de la deuxième authentification relative à l'authentification du lecteur va à l'encontre des habitudes de l'homme du métier. Cette authentification permet ainsi de réduire le nombre de messages échangés entre le lecteur R et l'étiquette T. En l'occurrence, pour l'authentification cryptoGPS le nombre de messages échangés passe de 6 à 4. Cette optimisation est significative en termes de coûts et de complexité.

Le procédé est décrit ici avec une version de l'algorithme cryptoGPS qui utilise les coupons d'authentification classiques, c'est-à-dire de taille importante. Le procédé n'est pas limité à cette version. En effet, des optimisations de l'algorithme cryptoGPS existent ; le procédé s'applique également à ces optimisations. Plus précisément, dans une première optimisation de cryptoGPS il est proposé d'utiliser des coupons d'authentification xᵢ de la forme (xᵢ, rᵢ) et appelés « coupons réduits », avec xᵢ = f(rᵢP), où rᵢ est un aléa, P un point sur la courbe elliptique, et f une fonction à sens unique connue, par exemple SHA-1 (de l'anglais « Secure Hash Algorithm »). Avec cette optimisation, l'espace mémoire nécessaire à la mémorisation des coupons d'authentification sur l'étiquette est réduit.

Dans une deuxième optimisation connue de cryptoGPS, un coupon d'authentification xᵢ est indexé par un index d'identification i. Pour calculer le coupon xᵢ, il est généré un aléa rᵢ au moyen d'une fonction pseudo-aléatoire « PRF » (de l'anglais « Pseudo Random Function ») appliquée à l'index i et paramétrée par une clé de régénération k mémorisée par l'étiquette (*rᵢ* = *PRFₖ*(*i*)). Les aléas rᵢ (donc, la sortie de la fonction PRF) ont une taille importante, par exemple 1100 bits. Le coupon xᵢ d'authentification de l'étiquette est alors calculé selon la formule suivante : *xᵢ* = *HASH*(*rᵢP*). Ainsi, seul le coupon xᵢ a besoin d'être mémorisé sur l'étiquette. L'aléa rᵢ est régénéré au moment de l'authentification au moyen de la fonction PRF. Il est connu que l'utilisation de la PRF nécessite peu de puissance de calcul.

Plusieurs exemples de fonctions f₁ et f₂ de génération de défis ont été décrites précédemment. Un premier exemple consiste à tronquer un coupon d'authentification, ou une réponse d'authentification en extrayant un nombre prédéterminé de bits de poids faible, ou de poids fort. L'invention n'est bien sûr pas limitée à ces exemples. Ainsi, dans un autre exemple de réalisation, les fonctions f₁, f₂ peuvent consister à extraire des bits d'indice pair ou d'indice impair. Dans un autre exemple de réalisation, les fonctions f₁, f₂ peuvent être des fonctions d'expansion qui a partir d'un coupon d'authentification ou une réponse d'authentification de 1 bits génère un défi de L bits, avec 1 < L. Une fonction de chiffrement par bloc peut être utilisée à cette fin. Enfin, dans un autre exemple, la fonction f₁ peut consister à tronquer une donnée et la fonction f₂ à étendre une donnée. Les coupons d'authentification, selon la version de cryptoGPS utilisée, ont une taille qui va de 64 bits, pour un coupon réduit, à plusieurs centaines de bits. Il est habituel dans les différentes versions de cryptoGPS que les défis aient une taille allant de 32 à 64 bits. Le choix des fonctions f₁ et f₂ peut alors être guidé par les tailles de ces données.

Le procédé est décrit ici pour l'algorithme asymétrique cryptoGPS. L'invention n'est pas limitée à cet algorithme. Ainsi, le procédé s'applique à tout protocole d'authentification à base de cryptographie asymétrique pour lequel des calculs qui peuvent s'avérer coûteux pour une des entités nécessitent un changement de canal de communication. Par exemple, le procédé s'applique également au protocole RSA (du nom des inventeurs, « Rivest, Shamir et Adleman »), pour lequel il est connu que les calculs qui mettent en oeuvre la clé secrète sont plus coûteux, en termes de ressources, que ceux qui mettent en oeuvre la clé publique.

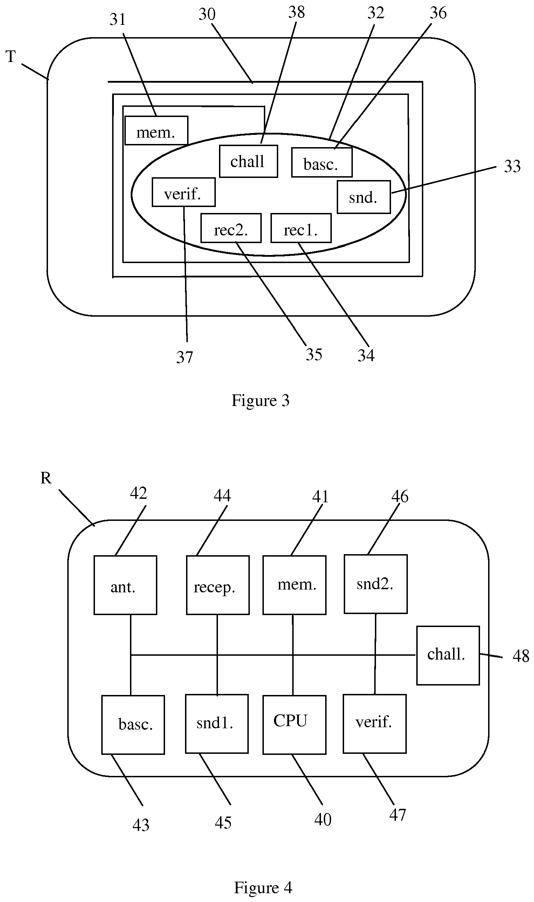

Une étiquette radio T selon une forme particulière de réalisation de l'invention va maintenant être décrite en relation avec la figure 3. L'étiquette T est adaptée pour dialoguer avec un lecteur radio (non représenté sur la figure 3) au cours d'une séquence d'authentification mutuelle conforme aux étapes du procédé décrites en relation avec la figure 2.

Dans l'exemple particulier décrit ici, l'étiquette T est un dispositif passif recevant son énergie du lecteur radio lors d'une interrogation par celui-ci. L'étiquette T comprend :
- une antenne 30 adaptée pour envoyer des données au lecteur et recevoir des données du lecteur,
- des moyens de stockage 31, tels qu'une mémoire, adaptés pour stocker la clé secrète s_{T} du couple de clés cryptoGPS (s_{T}, V_{T}), le point P et au moins le coupon d'authentification *x_{T}* en association avec l'aléa r. Dans une variante de réalisation qui concerne une optimisation du schéma cryptographique cryptoGPS, les moyens de stockage 31 sont également agencés pour stocker des éléments propres à cette optimisation, par exemple une clé secrète de régénération utilisée pour régénérer des aléas utilisés dans le calcul de coupons réduits, une ou plusieurs fonction pseudo-aléatoires, et les coupons d'authentification pré-calculés,
- une puce de silicium 32 comprenant une pluralité de transistors adaptés pour constituer des portes logiques d'une logique câblée non programmable. La logique câblée définit :
   - des moyens qui, couplés à l'antenne 30, constituent des moyens 33 d'envoi adaptés pour envoyer le premier coupon d'authentification *x_{T}* au lecteur. Les moyens d'envoi 33 sont également agencés pour envoyer au lecteur la première réponse d'authentification *y_{T}* calculée par l'étiquette.
   - des premiers moyens qui, couplés à l'antenne 30, constituent des premiers moyens 34 de réception, adaptés pour recevoir du lecteur sur le premier canal de communication le deuxième coupon d'authentification *x_{R}*,
   - des deuxièmes moyens qui, couplés à l'antenne 30 constituent des deuxièmes moyens 35 de réception, agencés pour recevoir du lecteur sur le deuxième canal de communication la deuxième réponse d'authentification *y_{R}*,
   - des moyens, qui couplés à l'antenne 30 constituent des moyens 36 de basculement de canal de communication, agencés pour passer d'un premier canal de communication à un deuxième canal de communication pour communiquer avec le lecteur. Le choix d'une bande de fréquence ou d'une autre pour communiquer avec le lecteur est effectué par exemple selon la distance qui sépare le lecteur de l'étiquette. Par exemple, dans le cas d'une étiquette passive, ce basculement peut être commandé par l'étiquette selon le niveau d'énergie qu'elle reçoit du lecteur. En effet, plus le lecteur est proche de l'étiquette et plus l'énergie fournie à l'étiquette est élevée. L'étiquette peut ainsi être agencée pour détecter qu'un seuil d'énergie fourni par le lecteur est atteint et basculer d'un premier canal de communication vers un deuxième canal de communication. En basculant du premier canal vers le deuxième canal de communication, l'étiquette qui dialoguait avec le lecteur sur le premier canal, choisit de répondre à des sollicitations du lecteur sur le deuxième canal. Ainsi, lorsque le lecteur se trouve à une distance de l'ordre d'un à quelques mètres de l'étiquette, la bande de fréquence sélectionnée est la bande UHF. Si le lecteur se rapproche de l'étiquette jusqu'à être à une distance proche de la dizaine de centimètres, alors les moyens de basculement 36 sélectionnent la bande de fréquence HF pour la communication entre le lecteur et l'étiquette ; dans le cas du procédé selon l'invention, le basculement sur le deuxième canal de communication sur lequel l'étiquette dispose de plus d'énergie permet d'initier l'authentification du lecteur,
   - des moyens de vérification 37, agencés pour vérifier que le deuxième coupon d'authentification *x_{R}* reçu du lecteur est égal à une valeur obtenue par addition d'une première valeur obtenue par addition sur la courbe elliptique du point P, *y_{R}* fois, et d'une deuxième valeur obtenue par addition sur la courbe elliptique de la clé publique V_{R}, *c_{R}* fois. Autrement dit que le deuxième coupon d'authentification *x_{R}* est égal à : *y_{R}P* + *c_{R}V_{R}.* Ainsi, les moyens de vérification permettent de vérifier l'authenticité du lecteur,
   - des moyens 38 d'obtention d'un défi, agencés pour obtenir un défi à partir d'un coupon d'authentification. Plus précisément, les moyens d'obtention d'un défi 38 comprennent une fonction f₁ et une fonction f₂. La première fonction f₁, appliquée au deuxième coupon d'authentification *x_{R}* permet d'obtenir un premier défi *c_{T},* utilisé par l'étiquette pour calculer la première réponse d'authentification *y_{T} .* La deuxième fonction f₂, appliquée à la première réponse d'authentification permet d'obtenir un deuxième défi *c_{R}* , utilisé par l'étiquette pour vérifier l'authenticité du lecteur.

Les moyens 33 d'envoi sont agencés pour mettre en oeuvre les étapes E21-1 et E21-7 d'envoi du procédé d'authentification mutuelle décrit précédemment. Les premiers moyens de réception 34 sont agencés pour mettre en oeuvre l'étape E21-5 de réception du deuxième coupon *x_{R}.* Les deuxièmes moyens de réception 35 sont agencés pour mettre en oeuvre l'étape E22-3 de réception de la deuxième réponse d'authentification *y_{R}*. Les moyens de vérification 37 sont agencés pour mettre en oeuvre l'étape E22-5 de vérification. Les moyens 38 d'obtention d'un défi sont adaptés pour mettre en oeuvre les étapes E22-4 et E21-6. Les moyens de basculement 36 sont agencés pour mettre en oeuvre l'étape E21-11 de basculement.

Dans une variante de réalisation l'étiquette T est un dispositif actif qui dispose d'une batterie pour émettre des signaux vers un lecteur situé à proximité.

Un lecteur radio R selon une forme particulière de réalisation de l'invention va maintenant être décrit en relation avec la figure 4.

Le lecteur radio R est un dispositif actif, émetteur de radio fréquences qui active une étiquette (non représentée sur la figure 4) qui passe à proximité en lui fournissant une énergie dont elle a besoin. Le lecteur R selon l'invention est adapté pour dialoguer avec l'étiquette au cours d'une séquence d'authentification conforme aux étapes du procédé selon l'invention décrites précédemment. Le lecteur R est adapté pour émettre et recevoir de signaux sur différents canaux de communication.

Le lecteur R comprend plusieurs modules :
- une unité de traitement 40, ou "CPU" (de l'anglais "Control Processing Unit"),
- un ensemble de mémoires, dont une mémoire volatile 41, ou "RAM" (pour "Random Access Memory") utilisée pour exécuter des instructions de code, stocker des variables, etc., et une mémoire de stockage de type « EEPROM » (de l'anglais « Electrically Erasable Programmable Read Only Memory »), agencée pour stocker la clé secrète s_{R} du couple de clés cryptoGPS (s_{R}, V_{R}), la clé publique V_{T} de l'étiquette et le point P. Dans une variante de réalisation qui concerne une optimisation du schéma cryptographique cryptoGPS, les moyens de stockage sont également agencés pour stocker des éléments propres à cette optimisation, par exemple des coupons d'authentification pré-calculés,
- une antenne 42, adaptée pour émettre et recevoir sur la voie radio,
- des moyens, qui couplés à l'antenne 42 constituent des moyens 43 de basculement d'un canal de communication à un autre, agencés pour passer d'une première fréquence de communication à une deuxième fréquence de communication, pour dialoguer avec l'étiquette pour la mise en oeuvre du protocole d'authentification. Plus précisément, le lecteur est agencé pour émettre sur différentes bandes de fréquence. Le choix d'une bande de fréquence ou d'une autre pour communiquer avec l'étiquette T selon un protocole d'authentification est commandé par l'étiquette, et est fonction par exemple de la distance qui sépare l'étiquette du lecteur. Ainsi, si l'étiquette T se situe à une distance de l'ordre du mètre, la bande de fréquence sélectionnée est la bande UHF. Si l'étiquette T se rapproche du lecteur R jusqu'à être à une distance proche de la dizaine de centimètres, alors les moyens de basculement 43 sélectionnent la bande de fréquence HF pour la communication entre l'étiquette et le lecteur,
- un module de réception 44, couplé à l'antenne 42, agencé pour recevoir de l'étiquette sur le premier canal de communication un premier coupon d'authentification *x_{T},* fonction du premier aléa r. Le module de réception 44 est également agencé pour recevoir sur le premier canal de communication une première réponse d'authentification *y_{T}* à un premier défi. La première réponse d'authentification est ensuite utilisée par un module de vérification 47 afin de vérifier l'authenticité de l'étiquette,
- des premiers moyens d'envoi 45, couplés à l'antenne 42, agencés pour envoyer à l'étiquette sur le premier canal de communication le deuxième coupon d'authentification *x_{R}*, fonction d'un deuxième aléa choisi par le lecteur.
- des deuxièmes moyens d'envoi 46, couplés à l'antenne, agencés pour envoyer à l'étiquette sur le deuxième canal de communication une deuxième réponse d'authentification *y_{R}*, calculée par le lecteur,
- les moyens de vérification 47, agencés pour vérifier l'authenticité de l'étiquette T. Plus précisément, les moyens de vérification 47 sont agencés pour vérifier que le premier coupon d'authentification *x_{T}* reçu de l'étiquette T est égal à une valeur obtenue par addition d'une première valeur obtenue par addition sur la courbe elliptique du point P, *y_{T}* fois, et d'une deuxième valeur obtenue par addition sur la courbe elliptique de la clé publique V_{T}, *c_{T}* fois. Autrement dit que le premier coupon d'authentification *x_{T}* est égal à : *y_{T}P* + *c_{T}V_{T},*
- des moyens 48 de génération d'un défi, agencés pour générer un premier défi *c_{T}* au moyen du deuxième coupon d'authentification *x_{R}*, et pour générer un deuxième défi *c_{R}* au moyen de la première réponse d'authentification *y_{T}.*

Les moyens communiquent via un bus de communication.

Les moyens 43 de basculement d'un canal de communication à un autre sont agencés pour mettre en oeuvre l'étape E21-11 de basculement précédemment décrite. Les moyens 44 de réception sont agencés pour mettre en oeuvre les étapes E21-2 et E21-8 du procédé d'authentification décrit précédemment. Les premiers moyens d'envoi 45 sont agencés pour mettre en oeuvre l'étape E21-4 et les deuxièmes moyens d'envoi 46 sont agencés pour mettre en oeuvre l'étape E22-2 décrite précédemment. Les moyens de vérification 47 sont agencés pour mettre en oeuvre l'étape E21-10 de vérification du procédé d'authentification décrit précédemment. Les moyens 48 de génération d'un défi sont agencés pour mettre en oeuvre les étapes E21-9 et E22-1 du procédé d'authentification.

Il s'agit de préférence de modules logiciels comprenant des instructions logicielles pour faire exécuter les étapes du procédé d'authentification mutuelle.

L'invention concerne donc aussi :
- un programme d'ordinateur comportant des instructions pour la mise en oeuvre du procédé d'authentification mutuelle d'une étiquette et d'un lecteur tel que décrit précédemment, lorsque ce programme est exécuté par un processeur ;
- un support d'enregistrement lisible par un lecteur sur lequel est enregistré le programme d'ordinateur décrit ci-dessus.

Les modules logiciels peuvent être stockés dans, ou transmis par un support de données. Celui-ci peut être un support matériel de stockage, par exemple un CD-ROM, une disquette magnétique ou un disque dur, ou bien un support de transmission tel qu'un signal, ou un réseau de télécommunication.

Dans un exemple de réalisation, le lecteur T est intégré dans un terminal mobile, apte ainsi à dialoguer avec des étiquettes radio.

## Revendications

1. Procédé d'authentification mutuelle (P21, P22) entre une étiquette radio (T) et un lecteur radio (R), comprenant les étapes suivantes, mises en oeuvre par l'étiquette radio :
- une étape d'envoi (E21-1) au lecteur radio d'un premier coupon d' authentification(*x_{T}*),
- une étape de réception (E21-5), en provenance du lecteur, d'un deuxième coupon d'authentification (*x_{R}*), ledit deuxième coupon étant reçu après l'envoi du premier coupon d'authentification,
- une étape de calcul (E21-6) d'un premier défi(*c_{T}*) calculé à partir du deuxième coupon d' authentification(*x_{R}*),
- une étape d'envoi (E21-7) d'une première réponse d'authentification(*y_{T}*), la première réponse d'authentification étant calculée à partir dudit premier défi(*c_{T}*),
- une étape de réception (E22-3), en provenance du lecteur, d'une deuxième réponse d'authentification(*y_{R}*), la deuxième réponse d'authentification étant calculée par le lecteur à partir d'un deuxième défi (*c_{R}*), calculé à partir de la première réponse d'authentification (*y_{T}*),
- une étape de vérification (E22-5) que le deuxième coupon d'authentification est égal à une valeur calculée à partir de la deuxième réponse d'authentification.

2. Procédé d'authentification mutuelle (P21, P22) entre un lecteur (R) et une étiquette radio (T), comprenant les étapes suivantes, mises en oeuvre par le lecteur :
- une étape de réception (E21-2), en provenance de l'étiquette, d'un premier coupon d'authentification(*x_{T}*),
- une étape d'envoi (E21-4) à l'étiquette, d'un deuxième coupon d'authentification(*x_{R}*), ledit deuxième coupon étant envoyé après la réception du premier coupon d'authentification,
- une étape de réception (E21-8), en provenance de l'étiquette, d'une première réponse d'authentification(*y_{T}*), la première réponse d'authentification étant calculée par l'étiquette à partir d'un premier défi(*c_{T}*), obtenu à partir du deuxième coupon d'authentification(*x_{R}*),
- une étape de vérification (E21-10) que le premier coupon d'authentification est égale à une valeur calculée à partir de la première réponse d'authentification,
- si la vérification est positive :
- une étape de calcul (E22-1) d'un deuxième défi(*c_{R}*) à partir de la première réponse d'authentification(*y_{T}*), et
- une étape d'envoi (E22-2) à l'étiquette d'une deuxième réponse d'authentification (*y_{R}*), la deuxième réponse d'authentification étant calculée à partir dudit deuxième défi(*c_{R}*).

3. Procédé d'authentification mutuelle selon la revendication 1 ou la revendication 2, comprenant :
- une phase d'authentification (P21) de l'étiquette par le lecteur, mise en oeuvre sur un premier canal de communication (UHF), durant laquelle le premier coupon d'authentification (*x_{T}*) et la première réponse d'authentification (*y_{T}*) sont envoyés (E21-1, E21-7) de l'étiquette au lecteur,
- une étape (E21-11) de basculement du premier canal de communication vers un deuxième canal de communication (HF), différent du premier canal, sur lequel est mise en oeuvre une phase d'authentification du lecteur par l'étiquette durant laquelle le deuxième coupon d'authentification (*x_{R}*) et la deuxième réponse d'authentification(*y_{R}*) sont reçus du lecteur,
**caractérisé en ce que** le deuxième coupon d'authentification est transmis sur le premier canal de communication.

4. Procédé selon la revendication 3 lorsqu'elle dépend de la revendication 1, comprenant les étapes suivantes, mises en oeuvre par l'étiquette :
- envoi (E21-1) sur le premier canal de communication du premier coupon d'authentification (*x_{T}*),
- réception (E21-5) sur le premier canal de communication du deuxième coupon d' authentification (*xᵣ*),
- envoi (E21-7) sur le premier canal de communication de la première réponse d'authentification (*y_{T}*),
- basculement (E21-11) du premier canal de communication vers le deuxième canal de communication,
- réception (E22-3) sur le deuxième canal de communication, de la deuxième réponse d'authentification (*y_{R}*).

5. Procédé selon la revendication 3 lorsqu'elle dépend de la revendication 2, comprenant les étapes suivantes, mises en oeuvre par le lecteur :
- réception (E21-2) sur le premier canal de communication, du premier coupon d'authentification (*x_{T}*),
- envoi (E21-4) sur le premier canal de communication, du deuxième coupon d'authentification (*x_{R}*),
- réception (E21-8) sur le premier canal de communication, de la première réponse d'authentification (*y_{T}*),
- basculement (E21-11) du premier canal de communication vers le deuxième canal de communication,
- envoi (E22-2) sur le deuxième canal de communication d'une deuxième réponse d'authentification (*y_{R}*).

6. Procédé selon l'une des revendications précédentes, dans lequel un premier défi(*c_{T}*), utilisé par l'étiquette pour calculer la première réponse d'authentification est obtenu en appliquant une première fonction (f₁) au deuxième coupon d'authentification (*x_{R}*).

7. Procédé selon l'une des revendications 1 à 5, dans lequel un deuxième défi (*c_{R}*), utilisé par le lecteur pour calculer la deuxième réponse d'authentification est obtenu en appliquant une deuxième fonction (f₂) à la première réponse d'authentification (*y_{T}*)*.*

8. Procédé selon la revendication 6, ou la revendication 7, dans lequel la première fonction est identique à la deuxième fonction.

9. Procédé selon l'une des revendications 3 à 8, dans lequel le premier canal de communication est un canal UHF, ou Ultra Haute Fréquence, et le deuxième canal de communication est un canal HF, ou Haute Fréquence.

10. Lecteur radio (R) agencé pour s'authentifier auprès d'au moins une étiquette radio et pour authentifier l'étiquette, et comprenant :
- des moyens (44) de réception, agencés pour recevoir un premier coupon d'authentification (*x_{T}*) et une première réponse d'authentification (*y_{T}*),
- des premiers moyens d'envoi (45), agencés pour envoyer un deuxième coupon d'authentification (*x_{R}*),
- des deuxièmes moyens d'envoi (46), agencés pour envoyer une deuxième réponse d'authentification (*y_{R}*), la deuxième réponse d'authentification étant calculée à partir d'un deuxième défi(*c_{R}*),
- des moyens de calcul (48), agencés pour calculer ledit deuxième défi(*c_{R}*) à partir de la première réponse d'authentification(*y_{T}*),
- des moyens (47) de vérification, agencés pour vérifier que le premier coupon d'authentification est égal à une valeur calculée à partir de la première réponse d'authentification.

11. Terminal mobile comprenant un lecteur radio selon la revendication 10.

12. Etiquette radio (T) adaptée pour authentifier un lecteur radio et pour s'authentifier auprès du lecteur, et comprenant :
- des moyens d'envoi (33), agencés pour envoyer un premier coupon d'authentification (*x_{T}*) et une première réponse d'authentification (*y_{T}*), la première réponse d'authentification étant calculée à partir d'un premier défi(*c_{T}*),
- des moyens de calcul (38), agencés pour calculer ledit premier défi(*c_{T}*) à partir d'un deuxième coupon d'authentification(*x_{R}*) reçu du lecteur,
- des premiers moyens (34) de réception, agencés pour recevoir le deuxième coupon d' authentification (*xᵣ*),
- des deuxièmes moyens (35) de réception, agencés pour recevoir une deuxième réponse d'authentification (*y_{R}*),
- des moyens (37) de vérification, agencés pour vérifier que le deuxième jeton d'authentification est égal à une valeur calculée à partir de la deuxième réponse d'authentification.

13. Système d'authentification radio comprenant :
- un lecteur radio selon la revendication 10, et
- au moins une étiquette radio selon la revendication 12.

14. Programme d'ordinateur destiné à être installé dans une mémoire d'un lecteur radio, comprenant des instructions pour la mise en oeuvre des étapes du procédé d'authentification mutuelle d'une étiquette radio et d'un lecteur selon l'une des revendications 2 et 5 à 9 qui sont exécutées par le lecteur, lorsque le programme est exécuté par un processeur.

15. Support de données sur lequel est enregistré le programme d'ordinateur selon la revendication 14.

## Patentansprüche

1. Verfahren zum gegenseitigen Authentifizieren (P21, P22) zwischen einem Funketikett (T) und einem Funkleser (R), das die folgenden Schritte umfasst, die durch das Funketikett ausgeführt werden:
- einen Schritt des Sendens (E21-1) einer ersten Authentifizierungsmarke (x_{T}) an den Funkleser,
- einen Schritt des Empfangens (E21-5) einer zweiten Authentifizierungsmarke (x_{R}) von dem Leser, wobei die zweite Marke empfangen wird, nachdem die erste Authentifizierungsmarke geschickt worden ist,
- einen Schritt des Berechnens (E21-6) einer ersten Anforderung (c_{T}) anhand der zweiten Authentifizierungsmarke (x_{R}),
- einen Schritt des Sendens (E21-7) einer ersten Authentifizierungsantwort (y_{T}), wobei die erste Authentifizierungsantwort anhand der ersten Anforderung (c_{T}) berechnet wird,
- einen Schritt des Empfangens (E22-3) einer zweiten Authentifizierungsantwort (y_{R}) von dem Leser, wobei die zweite Authentifizierungsantwort durch den Leser anhand einer zweiten Anforderung (c_{R}) berechnet wird, die ihrerseits anhand der ersten Authentifizierungsantwort (y_{T}) berechnet wird,
- einen Schritt des Verifizierens (E22-5), dass die zweite Authentifizierungsmarke gleich einem Wert ist, der anhand der zweiten Authentifizierungsantwort berechnet wird.

2. Verfahren zum gegenseitigen Authentifizieren (P21, P22) zwischen einem Leser (R) und einem Funketikett (T), das die folgenden Schritte umfasst, die von dem Leser ausgeführt werden:
- einen Schritt des Empfangens (E21-2) einer ersten Authentifizierungsmarke (x_{T}) von dem Etikett,
- einen Schritt des Sendens (E21-4) einer zweiten Authentifizierungsmarke (x_{R}) zu dem Etikett, wobei die zweite Marke geschickt wird, nachdem die erste Authentifizierungsmarke empfangen worden ist,
- einen Schritt des Empfangens (E21-8) von dem Etikett einer ersten Authentifizierungsantwort (y_{T}), wobei die erste Authentifizierungsantwort durch das Etikett anhand einer ersten Anforderung (c_{T}) berechnet wird, die anhand der zweiten Authentifizierungsmarke (x_{R}) erhalten wird,
- einen Schritt des Verifizierens (E21-10), dass die erste Authentifizierungsmarke gleich einem Wert ist, der anhand der ersten Authentifizierungsantwort berechnet wird;
- falls die Verifikation positiv ist:
- einen Schritt des Berechnens (E22-1) einer zweiten Anforderung (c_{R}) anhand der ersten Authentifizierungsantwort (y_{T}); und
- einen Schritt des Sendens (E22-2) zu dem Etikett einer zweiten Authentifizierungsantwort (y_{R}), wobei die zweite Authentifizierungsantwort anhand der zweiten Anforderung (c_{R}) berechnet wird.

3. Verfahren zum gegenseitigen Authentifizieren nach Anspruch 1 oder Anspruch 2, das Folgendes umfasst:
- eine Phase (P21) des Authentifizierens des Etiketts durch den Leser, die in einem ersten Kommunikationskanal (UHF) ausgeführt wird und während derer die erste Authentifizierungsmarke (x_{T}) und die erste Authentifizierungsantwort (y_{T}) von dem Etikett zu dem Leser geschickt werden (E21-1, E21-7),
- einen Schritt (E21-11) zum Umschalten von dem ersten Kommunikationskanal zu einem zweiten Kommunikationskanal (HF), der von dem ersten Kanal verschieden ist, in dem eine Phase des Authentifizierens des Lesers durch das Etikett ausgeführt wird, während derer die zweite Authentifizierungsmarke (x_{R}) und die zweite Authentifizierungsantwort (y_{R}) von dem Leser empfangen werden,
**dadurch gekennzeichnet, dass** die zweite Authentifizierungsmarke auf dem ersten Kommunikationskanal übertragen wird.

4. Verfahren nach Anspruch 3, wenn abhängig von Anspruch 1, das die folgenden Schritte umfasst, die von dem Etikett ausgeführt werden:
- Senden (E21-1) auf dem ersten Kommunikationskanal der ersten Authentifizierungsmarke (x_{T}),
- Empfangen (E21-5) auf dem ersten Kommunikationskanal der zweiten Authentifizierungsmarke (xᵣ),
- Senden (E21-7) auf dem ersten Kommunikationskanal der ersten Authentifizierungsantwort (y_{T}),
- Schalten (E21-11) von dem ersten Kommunikationskanal zu dem zweiten Kommunikationskanal,
- Empfangen (E22-3) auf dem zweiten Kommunikationskanal der zweiten Authentifizierungsantwort (y_{R}).

5. Verfahren nach Anspruch 3, wenn abhängig von Anspruch 2, das die folgenden Schritte umfasst, die durch den Leser ausgeführt werden:
- Empfangen (E21-2) auf dem ersten Kommunikationskanal der ersten Authentifizierungsmarke (x_{T}),
- Senden (E21-4) auf dem ersten Kommunikationskanal der zweiten Authentifizierungsmarke (x_{R}),
- Empfangen (E21-8) auf dem ersten Kommunikationskanal der ersten Authentifizierungsantwort (y_{T}),
- Schalten (E21-11) von dem ersten Kommunikationskanal zu dem zweiten Kommunikationskanal,
- Senden (E22-2) auf dem zweiten Kommunikationskanal einer zweiten Authentifizierungsantwort (y_{R}).

6. Verfahren nach einem der vorhergehenden Ansprüche, wobei die erste Anforderung (c_{T}), die von dem Etikett verwendet wird, um die erste Authentifizierungsantwort zu berechnen, durch Anwenden einer ersten Funktion (f₁) auf die zweite Authentifizierungsmarke (x_{R}) erhalten wird.

7. Verfahren nach einem der Ansprüche 1 bis 5, wobei eine zweite Anforderung (c_{R}), die von dem Leser verwendet wird, um die zweite Authentifizierungsantwort zu berechnen, durch Anwenden einer zweiten Funktion (f₂) auf die erste Authentifizierungsantwort (y_{T}) erhalten wird.

8. Verfahren nach Anspruch 6 oder nach Anspruch 7, wobei die erste Funktion mit der zweiten Funktion identisch ist.

9. Verfahren nach einem der Ansprüche 3 bis 8, wobei der erste Kommunikationskanal ein UHF-Kanal oder Ultrahochfrequenzkanal ist und der zweite Kommunikationskanal ein HF-Kanal oder Hochfrequenzkanal ist.

10. Funkleser (R), der dafür ausgelegt ist, sich bei wenigstens einem Funketikett zu authentifizieren und um das Etikett zu authentifizieren, der Folgendes umfasst:
- Empfangsmittel (44), die dafür ausgelegt sind, eine erste Authentifizierungsmarke (x_{T}) und eine erste Authentifizierungsantwort (y_{T}) zu empfangen,
- erste Sendemittel (45), die dafür ausgelegt sind, eine zweite Authentifizierungsmarke (x_{R}) zu senden,
- zweite Sendemittel (46), die dafür ausgelegt sind, eine zweite Authentifizierungsantwort (y_{R}) zu senden, wobei die zweite Authentifizierungsantwort anhand einer zweiten Anforderung (c_{R}) berechnet wird,
Rechenmittel (48), die dafür ausgelegt sind, die zweite Anforderung (c_{R}) anhand der ersten Authentifizierungsantwort (y_{T}) zu berechnen,
- Verifikationsmittel (47), die dafür ausgelegt sind, zu verifizieren, dass die erste Authentifizierungsmarke gleich einem Wert ist, der anhand der ersten Authentifizierungsantwort berechnet wird.

11. Mobiles Endgerät, das einen Funkleser nach Anspruch 10 enthält.

12. Funketikett (T), das dafür ausgelegt ist, einen Funkleser zu authentifizieren und sich bei dem Leser zu authentifizieren, das Folgendes umfasst:
- Sendemittel (33), die dafür ausgelegt sind, eine erste Authentifizierungsmarke (x_{T}) und eine erste Authentifizierungsantwort (y_{T}) zu senden, wobei die erste Authentifizierungsantwort anhand einer ersten Anforderung (c_{T}) berechnet wird,
- Rechenmittel (38), die dafür ausgelegt sind, die erste Anforderung (c_{T}) anhand einer zweiten Authentifizierungsmarke (x_{R}), die von dem Leser empfangen wird, zu berechnen,
- erste Empfangsmittel (34), die dafür ausgelegt sind, die zweite Authentifizierungsmarke (x_{R}) zu empfangen,
- zweite Empfangsmittel (35), die dafür ausgelegt sind, eine zweite Authentifizierungsantwort (y_{R}) zu empfangen,
- Verifikationsmittel (37), die dafür ausgelegt sind, zu verifizieren, dass die zweite Authentifizierungsmarke gleich einem Wert ist, der anhand der zweiten Authentifizierungsantwort berechnet wird.

13. Funkauthentifizierungssystem, das Folgendes umfasst:
- einen Funkleser nach Anspruch 10, und
- wenigstens ein Funketikett nach Anspruch 12.

14. Computerprogramm, das dazu bestimmt ist, in einem Speicher eines Funklesers installiert zu werden, und Befehle enthält, um die Schritte des Verfahrens zum gegenseitigen Authentifizieren eines Funketiketts und eines Lesers nach einem der Ansprüche 2 und 5 bis 9, die von dem Leser ausgeführt werden, auszuführen, wenn das Programm von einem Prozessor ausgeführt wird.

15. Datenträger, auf dem das Computerprogramm nach Anspruch 14 aufgezeichnet ist.

## Claims

1. Method of mutual authentication (P21, P22) between a radio tag (T) and a radio reader (R), comprising the following steps, implemented by the radio tag:
- a step of dispatching (E21-1) to the radio reader a first authentication coupon (*x_{T}*),
- a step of receiving (E21-5), from the reader, a second authentication coupon (*x_{R}*), said second coupon being received after the dispatching of the first authentication coupon,
- a step of computing (E21-6) a first challenge (c_{T}), on the basis of the second authentication coupon (x_{R}),
- a step of dispatching (E21-7) a first authentication response (y_{T}), the first authentication response being computed on the basis of said first challenge (c_{T}),
- a step of receiving (E22-3), from the reader, a second authentication response (*y_{R}*), the second authentication response being computed by the reader on the basis of a second challenge (*c_{R}*), computed on the basis of the first authentication response (*y_{T}*),
- a step of verifying (E22-5) that the second authentication coupon is equal to a value computed on the basis of the second authentication response.

2. Method of mutual authentication (P21, P22) between a reader (R) and a radio tag (T), comprising the following steps, implemented by the reader:
- a step of receiving (E21-2), from the tag, a first authentication coupon (*x_{T}*),
- a step of dispatching (E21-4) to the tag, a second authentication coupon (x_{R}), said second coupon being dispatched after the receipt of the first authentication coupon,
- a step of receiving (E21-8), from the tag, a first authentication response (y_{T}), the first authentication response being computed by the tag on the basis of a first challenge (c_{T}) , obtained on the basis of the second authentication coupon (x_{R}),
- a step of verifying (E21-10) that the first authentication coupon is equal to a value computed on the basis of the first authentication response;
- if the verification is positive:
- a step of computing (E21-1) a second challenge (c_{R}) on the basis of the first authentication response (y_{T}); and
- a step of dispatching (E22-2) to the tag a second authentication response (y_{R}), the second authentication response being computed on the basis of said second challenge (c_{R}).

3. Method of mutual authentication according to Claim 1 or Claim 2, comprising:
- a phase of authentication (P21) of the tag by the reader, implemented on a first communication channel (UHF), during which the first authentication coupon (*x_{T}*) and the first authentication response (*y_{T}*) are dispatched (E21-1, E21-7) from the tag to the reader,
- a step (E21-11) of toggling from the first communication channel to a second communication channel (HF), different from the first channel, on which is implemented a phase of authentication of the reader by the tag during which the second authentication coupon (*x_{R}*) and the second authentication response (*y_{R}*) are received from the reader,
**characterized in that** the second authentication coupon is transmitted on the first communication channel.

4. Method according to Claim 3 when it depends on Claim 1, comprising the following steps, implemented by the tag:
- dispatching (E21-1) on the first communication channel of the first authentication coupon (*x_{T}*),
- reception (E21-5) on the first communication channel of the second authentication coupon(*x_{T}*),
- dispatching (E21-7) on the first communication channel of the first authentication response (*y_{T}*),
- toggling (E21-11) from the first communication channel to the second communication channel,
- reception (E22-3) on the second communication channel, of the second authentication response (*y_{R}*).

5. Method according to Claim 3 when it depends on Claim 2, comprising the following steps, implemented by the reader:
- reception (E21-2) on the first communication channel, of the first authentication coupon (*x_{T}*),
- dispatching (E21-4) on the first communication channel, of the second authentication coupon (*x_{R}*),
- reception (E21-8) on the first communication channel, of the first authentication response (*y_{T}*),
- toggling (E21-11) from the first communication channel to the second communication channel,
- dispatching (E22-2) on the second communication channel of a second authentication response (*y_{R}*).

6. Method according to one of the preceding claims, in which a first challenge (c_{T}), used by the tag to compute the first authentication response is obtained by applying a first function (f₁) to the second authentication coupon (*x_{R}*).

7. Method according to one of Claims 1 to 5, in which a second challenge (*c_{R}*), used by the reader to compute the second authentication response is obtained by applying a second function (f₂) to the first authentication response (*y_{T}*).

8. Method according to Claim 6, or Claim 7, in which the first function is identical to the second function.

9. Method according to one of Claims 3 to 8, in which the first communication channel is a UHF, or Ultra High Frequency, channel and the second communication channel is an HF, or High Frequency, channel.

10. Radio reader (R) designed to authenticate itself with at least one radio tag and to authenticate the tag, and comprising:
- reception means (44), designed to receive a first authentication coupon (*x_{T}*), and a first authentication response (*y_{T}*).
- first dispatching means (45), designed to dispatch a second authentication coupon (*x_{R}*),
- second dispatching means (46), designed to dispatch a second authentication response (*y_{R}*), the second authentication response being computed on the basis of a second challenge (c_{R}),
- computation means (48), designed to compute said second challenge (c_{R}) on the basis of the first authentication response (y_{T}),
- verification means (47), designed to verify that the first authentication coupon is equal to a value computed on the basis of the first authentication response.

11. Mobile terminal comprising a radio reader according to Claim 10.

12. Radio tag (T) suitable for authenticating a radio reader and for authenticating itself with the reader, and comprising:
- dispatching means (33), designed to dispatch a first authentication coupon (*x_{T}*) and a first authentication response (*y_{T}*), the first authentication response being computed on the basis of a first challenge (c_{T}),
- computation means (38), designed to compute said first challenge (c_{T}) on the basis of a second authentication coupon (x_{R}) received from the reader,
- first reception means (34), designed to receive the second authentication coupon (*xᵣ*),
- second reception means (35), designed to receive a second authentication response (*y_{R}*),
- verification means (37), designed to verify that the second authentication token is equal to a value computed on the basis of the second authentication response.

13. Radio authentication system comprising:
- a radio reader according to Claim 10, and
- at least one radio tag according to Claim 12.

14. Computer program intended to be installed in a memory of a radio reader, comprising instructions for the implementation of the steps of the method of mutual authentication of a radio tag and of a reader according to one of Claims 2 and 5 to 9 which are executed by the reader, when the program is executed by a processor.

15. Data medium on which the computer program according to Claim 14 is recorded.
